(19) **Europäisches Patentamt / European Patent Office / Office européen des brevets**

(11) **EP 1 443 773 B1**

(12) **EUROPEAN PATENT SPECIFICATION**

(45) Date of publication and mention
of the grant of the patent:
**19.05.2010 Bulletin 2010/20**

(51) Int Cl.:
*H04N 7/52* *(2006.01)*  *H04N 7/60* *(2006.01)*
*H04N 7/62* *(2006.01)*  *H04N 7/24* *(2006.01)*
*H04N 5/76* *(2006.01)*  *H04N 5/775* *(2006.01)*
*H04N 5/765* *(2006.01)*

(21) Application number: **04100312.0**

(22) Date of filing: **29.01.2004**

(54) **Device and process for the read-synchronization of video and ancillary data**

Gerät und Verfahren zur Lesesynchronisierung von Video-Daten und Hilfs-Daten

Dispositif et méthode de synchronisation en lecture de données vidéo et de données annexes

(84) Designated Contracting States:
**DE ES FR GB IT**

(30) Priority: **31.01.2003 FR 0301282**

(43) Date of publication of application:
**04.08.2004 Bulletin 2004/32**

(73) Proprietor: **Thomson Licensing
92443 Issy-les-Moulineaux Cedex (FR)**

(72) Inventors:
• **Steyer, Jean-Marie
35220 Chateaubourg (FR)**
• **Amouriaux, Jean-Michel
35700 Rennes (FR)**
• **Mace, Philippe
35000 Rennes (FR)**

(74) Representative: **Kerber, Thierry
Thomson
1, rue Jeanne d'Arc
92443 Issy-les-Moulineaux Cedex (FR)**

(56) References cited:
**US-A- 6 122 434  US-A1- 2001 005 447**

**Description**

The present invention pertains to a device and to a process for the read-synchronization of video data and of ancillary data, these data being recorded in a storage space in multiplexed and chronological form, as well as to associated products. It applies in particular to the management of the synchronization of teletext subtitles in record read control mode ("playback").

In a digital television decoder associated with storage functionalities, various streams of audio, video, teletext/subtitles type and of other types such as described in particular in the MPEG (standing for Moving Picture Experts Group) and DVB (standing for Digital Video Broadcasting) standards may be stored in the form of a partial stream on a storage space, for the purpose of being played back and decoded at a later instant. The digital television decoder is for example equipped with a personal video receiver or PVR (standing for Personal Video Recorder), furnished with a built-in hard disk on which the streams are stored.

These various streams are customarily transported in an MPEG transport stream, demultiplexed by a demultiplexer, and transmitted respectively to elementary decoders for audio, video, teletext or subtitles decoding, or transmitted to systems for processing data (MPEG sections or other types of data). The streams transmitted to a decoding facility may be intended to be used synchronously. This is the case for example for audio and video information which is interrelated by temporal synchronization information in the form of time labels or PTSs (standing for Program Time Stamps). The utilization of this information, combined with the updating of a local clock by means of time reference signals denoted PCR (standing for Program Clock Reference), in the present case at the decoding level, makes it possible to display images synchronously with the sound. This method is well known and employed in digital decoders.

The transmission of the synchronization information is however not obligatory according to the DVB standard in the case of subtitles/teletext data. Indeed, the synchronization for such data, the requirement for which is much less precise than in the case of audio, is carried out *de facto* by quasi-immediate decoding (a few tens of ms at the most) of the data received at the output of the demultiplexer. More precisely, by considering two consecutive packets transmitted in the stream and relating respectively to the video and synchronous subtitles on transmission, the corresponding error in terms of synchronization results:

- from the duration required to recover the whole of the compressed video image;
- from the duration required to establish a nominal video decoding regime, that is to say from the duration of filling of a transport buffer memory of the video elementary decoder so that this buffer cannot be starved of data ("underflow") or be too full of data ("overflow");
- from the duration required for the decoding of the data in displayable form and for the displaying of the data in the video frames;
- from the duration required to recover all of the associated subtitles/teletext data;
- and from the duration required to decode and compose subtitles displayable by the screen display function or OSD (standing for On-Screen Display) of the decoder.

It is these durations aggregated that typically extend over a few tens of ms. Hence, within the context of the utilization of subtitle streams in nominal direct decoding mode in accordance with an antenna signal, the presence or otherwise of synchronization information in these streams is of no great interest, the taking into account of an average error sufficing to gain precision.

In the case of a partial stream played back from a storage facility, on the other hand, the video data are decoded in tempo with their arrival in the video decoding buffer. The principle generally used during the reading out of data played back from a storage facility consists in buffering (that is to say placing in buffer memory) the reading times for the storage facilities by maximally filling all the data buffers used, and in particular the video decoding buffer. In this way, any reading fault as regards a storage facility entailing a delay in the reading of these data is not visible. Thus, all the data - audio, video, subtitle etc - read out from a storage facility is provided to the demultiplexer, with feedback control directed by the level of fill of the video decoding buffer.

In the case where no pre-dispatch synchronization mechanism (such as PTS) is employed for the subtitles, the latter are decoded as soon as they are available at the output of the demultiplexer, in the same way as in direct reception. Video data that are not yet decoded might therefore still be present in the video decoding buffer, whereas the corresponding subtitles are already being displayed. In practice, the size of the video decoding buffer and the customary video compression bit rates (more than 300 kbytes for the size of the decoding buffer and an MPEG video bit rate of the order of 2.0 Mbits/s) are such that it is possible to have several seconds of gap between these subtitles and the as yet undecoded image. The coherence of display of the subtitles with respect to the video is then seriously compromised.

A possible solution to this problem would consist in introducing time labels on reception, before recording the data in the storage space. These labels would then serve to read the subtitles synchronously. Thus, a conceivable method consists in taking account of the video PTSs to determine the time labels of the subtitles, by analyzing the stream so as to edit the video transport packets and the packets of elementary video streams or PES (standing for Packet Elementary Streams) and by feedback controlling the local clock to the video PCR signals. These operations are relatively complex and unwieldy to implement, and increase the storage room required in order to be able to store the time labels created for the subtitles. They moreover require a knowledge of the video packet identifiers (called PID standing for Packet Identifiers) and lead to difficulties of implementation when the video PESs are scrambled.

Another method with introduction of time labels before storage would consist in systematically affixing such additional labels to all the packets on the basis of a local clock, while transferring the analysis operations to the reading. Thus, during the reading of the data recorded in the storage space, the recorded data would be recovered, they would be transmitted synchronously by virtue of these additional labels from a first module to a second module, and then the data received by the second module would be processed like those received directly from an external source. However, this technique requires additional storages for storing all the time labels, and raises the complexity of recording and of reading by requiring the implementation of specific procedures that are relatively unwieldy in terms of means and operations.

It is also known, when recording audiovisual data and ancillary information on optical discs, such as for example DVDs (Digital Versatile Discs) or CDs, (Compact Discs) to introduce time labels associated with audiovisual and ancillary data.

Thus, patent US-2001/0005447, discloses methods for multiplexing and demultiplexing audiovisual digital data and characters. Each recorded packet of these data includes a time label indicative of a decoding time or display time. During reproduction of the recorded data, a time label supervisor controls the synchronism of decoding of several decoders respectively associated with the video, the audio and with subtitles, in relation to the time labels of the data packets.

A technique of this type can be utilized for example in the embodiment set forth in patent US-6,122,434. This document relates to a medium and to an apparatus for recording information, involving various levels of permission of reproduction. It is centred around parental supervision applied to optical discs, for which the levels of permission differ according to country. The disclosure pertains in particular to systems for recording and reproducing DVDs, that make it possible respectively to record, and to reproduce synchronously, video, audio, subimage and information supervision data. The synchronization of the data extracted from the recording medium is performed by buffer memories before decoding, respectively associated with the above data categories. The modus operandi in respect of these multiple synchronizations not being made explicit, synchronization by time labels seems to be the appropriate solution.

However, the introduction of time labels for all the data necessitates complex means, in particular hardly appropriate for recordings of streams received in terminals, and requires extra storages.

An additional difficulty is posed by the use of special effects modes (or trick modes) on the basis of the recordings of the data in the storage space, even in the presence of time labels received with the subtitling data. Specifically, as soon as the speed of transmission of the video data is decelerated or accelerated with respect to the normal speed, it becomes necessary to make corrections to the time labels associated with the subtitles, as a function of this speed of transmission of the video data. Such a correction of synchronization necessitates specific processing adapted to trick modes, which may in particular rely on adjusting a local counter's value elapsed since the arrival of the last video PTS. The complexity of the mechanisms able to utilize the recorded data is therefore heightened.

What is more, in the absence of time labels associated with the subtitling data, the problems mentioned above in respect of a normal reading speed are further heightened in slow-motion mode, since the delay between the displaying of the subtitles and that of the corresponding video images becomes still greater.

The present invention relates to a device for the read-synchronization of video data and of subtitles on the basis of a storage space, enabling synchronized reading at the cost of a tiny expense in terms of storage and operations. Moreover, this device may be relatively simple to implement. It is in particular capable of being applied to video streams and subtitle streams received and recorded, without these subtitles being furnished with time labels. Thus, the device of the invention may be capable of remedying the absence of synchronization information in teletext DVB type streams, in cases where partial transport streams are played back from a hard disk more precisely for the synchronization of subtitles transported in teletext type streams.

The synchronization device of the invention may also have as advantage, in preferred embodiments, that it allows in particular adaptation of synchronization to special effects modes, whether the speed of reading from the storage space is accelerated or decelerated.

More generally, the invention concerns a device for the read-synchronization of video data and of ancillary data, these data being recorded in a storage space in multiplexed and chronological form, having the qualities mentioned above.

The invention also relates to a synchronization process corresponding to the synchronization device of the invention, a video decoding system comprising such a device and an associated computer program.

The invention finds applications not only in subtitling, but also in respect of synchronization pertaining especially to the production of data (sounds, pictures, commands etc.) in connection with interactive programs, and to the displaying or sound transmission of information tacked onto video programs, provided that synchronization is performed live.

To this end, a subject of the invention is a device according to claim 1.

The term "communication" of the data is understood to mean any operation of transmission to a module external to the reading assembly, which may therefore lead in particular to screen display or to sound production at the local level (presentation of data to a television viewer, for example), or to dispatching into an external circuit of the data read (transmission from a centralized system to a suite of television sets of a property or of an enterprise, for example).

It is possible to introduce adaptation delays either as regards the instants of transmission to the ancillary reading assembly, or as regards the communication at the output of this assembly, or else possibly as regards intermediate steps, for example the decoding of current elements of the ancillary data once they have reached the ancillary reading assembly. Combined solutions are also possible.

The device of the invention is particularly unexpected in the light of existing methods, since it does not implement any extra time label for the ancillary data. By contrast, it best utilizes the actual operation of the mechanisms for reading the video and ancillary data, by being able to take account of the delays caused by the video-buffer accumulation of the video data before decoding. This utilization is performed in real time when the data recorded in the storage space are read. More precisely, the synchronization relies on a form of feedback control of the instants of communication of the ancillary data, as a function of the instants of communication of the video data.

This device may be especially advantageous in the light of existing techniques, or in relation to what would appear to be naturally tempting for a person skilled in the art (introduction of time labels):

- synchronization possible even in the absence of any time label for the ancillary data received and recorded;
- no specific operation necessary before recording of the data in the storage space;
- no need to record excess information (savings in storage);
- utilization possible of any recording of video and ancillary data in multiplexed and chronological form, or even without any specific provision regarding recording (flexibility of use);
- and possibility of reading video according to a customary technique, without the need for additional operations of syntactic stream analysis.

Preferably, the calculating module is capable of dynamically obtaining the information as regards the instants of communication of the video data, in such a way that the adaptation module is able to take account of the accelerations and decelerations of reading of these data. This dynamic obtaining may in particular be carried out by means of a sufficiently temporally fast sampling of measurements. For example, measurements are performed every video frame.

In another embodiment, the calculating module is designed to obtain this information statically, then to use it subsequently in a systematic manner. It is in particular possible to impose a fixed time offset on the instants of communication of the ancillary data, on the basis of initial measurements. In an improved form of this embodiment, the measurements are redone automatically in the case of accelerated or decelerated running speed (these operations being triggered by a change of speed or of special effects mode signal). The benefit of this static embodiment, which is less precise and flexible of adaptation than the dynamic one, is to further reduce the quantity of operations required.

In advantageous forms of the data, the modules are designed so that the ancillary data comprise:

- subtitles;
- data relating to at least one interactive program (pictures, sounds, messages, commands etc);
- or a combination of the above two types of data.

The modules are advantageously designed so that the data are recorded in digital form, preferably according to the DVB standard.

The calculating module is then preferably such that this information is chosen from among measurements giving:

- a quantity of the current elements present in this buffer memory for the video;
- an incoming stream of the current elements entering this buffer memory;
- an outgoing stream of the current elements leaving this buffer memory;
- a number of the current elements leaving this buffer memory since a predefined instant of transmission of the ancillary data;
- and any combination of at least two of the above measurements.

In a first advantageous form of such an calculating module, the latter is designed to measure a number B of bytes present in the video buffer, as well as a video bit rate D at the output of the buffer, as quotient of the level of the buffer over the stream of video data that are dispatched thereto. The apprising module is intended to deduce from these values B and D a video offset delay, given by the ratio B/D (approximate delay between the receipt of the video data in the video reading assembly and their decoding - with the exclusion of the last data packets received by the decoding unit). This video decoding delay, possibly supplemented by means of other parameters, is then utilizable by the adaptation module.

In a second advantageous form of embodiment, the calculating module is designed to establish the number B of bytes present in the video buffer, and to determine the outgoing video stream leaving the buffer (consumption of data). The apprising module is then capable of comparing the number of bytes consumed in the buffer with N and of transmitting a trigger signal to the adaptation module for communicating the ancillary data, when the consumption of B bytes in the video buffer since the start of the count of the bytes is completed. This embodiment makes it possible to ensure better precision than the first in the fast forward or slow motion modes, since the value of the bit rate is not considered.

In a third advantageous form of embodiment, the calculating module is designed to measure the number B of bytes present in the video buffer and the speed of decoding of the video decoding unit, and to refer them to one another. The delay obtained gives a video offset approximately representing the time span elapsed between the receipt of the video data in the video reading assembly and their complete decoding. Thus, the actual bit rate is immediately modified as soon as the decoding speed changes, thereby avoiding the need to wait for this value of bit rate to stabilize over time.

In a more sophisticated version of any one of the previous embodiments pertaining to the apprising of particulars at least relating to the content of the video buffer, the calculating module is designed to apply a low-pass filter to values estimated dynamically by sampling, such as values of video bit rate (first embodiment) or of decoding speed (third embodiment).

In a fourth advantageous form of embodiment, advantageously combined with any one of the previous ones, a fixed value of offset incorporating various accessory delays is added to a delay estimation based on the content of the buffer. This value may in particular take account:

- on the one hand positively, of the durations of recovery of a compressed video image, of decoding of the data in displayable form, of displaying of the data in the video frames,
- and on the other hand negatively, of the durations of recovery of a set of ancillary data such as subtitles associated with a video image, of decoding and of composition of these subtitles displayable by the OSD function of the decoder.

In other forms of apprising as regards the instants of communication of the video data by the video reading assembly, the calculating module is designed to bring about the triggering of return signals upon instants of decoding or of communication of video data. These return signals may then be utilized directly in respect of temporal adjustments of the instants of communication of the ancillary data. These embodiments, able to afford greater precision than the previous ones, nevertheless require more complex mechanisms (recognition of the images to be signalled).

The invention relates moreover to a video decoding system, characterized in that it comprises a synchronization device in accordance with any one of the embodiments of the invention.

This video decoding system advantageously comprises a storage space, this storage space consisting preferably of a hard disk.

The subject of the invention is also a process according to claim 8.

The synchronization process is preferably intended to be implemented by means of a synchronization device in accordance with any one of the embodiments of the invention.

The invention also applies to a computer program product comprising program code instructions for the execution of the steps of the process according to the invention, when this program is executed on a computer. The expression "computer program product" is understood to mean a computer program support, which may consist not only of a storage space containing the program, such as a disc or a cassette, but also of a signal, such as an electrical or optical signal.

The invention will be better understood and illustrated by means of the following wholly nonlimiting exemplary embodiments and implementations, with reference to the appended figures in which:

- Figure 1 is a diagram of the principle of a video decoding system comprising a synchronization device in accordance with the invention;
- Figure 2 shows a multiplexed string of video data representing N images and of corresponding subtitling data, recorded in a hard disk of the video decoding system of Figure 1;
- Figure 3 represents an initial step of read-utilization by the decoding system of Figure 1, of the data string of Figure 2;
- Figure 4 represents a later step of re-utilization by the decoding system of Figure 1, of the data string of Figure 2;
- Figure 5 represents a subsequent step of read-utilization by the decoding system of Figure 1, of the data string of Figure 2;
- and Figure 6 represents a last step of read-utilization by the decoding system of Figure 1, of the data string of Figure 2.

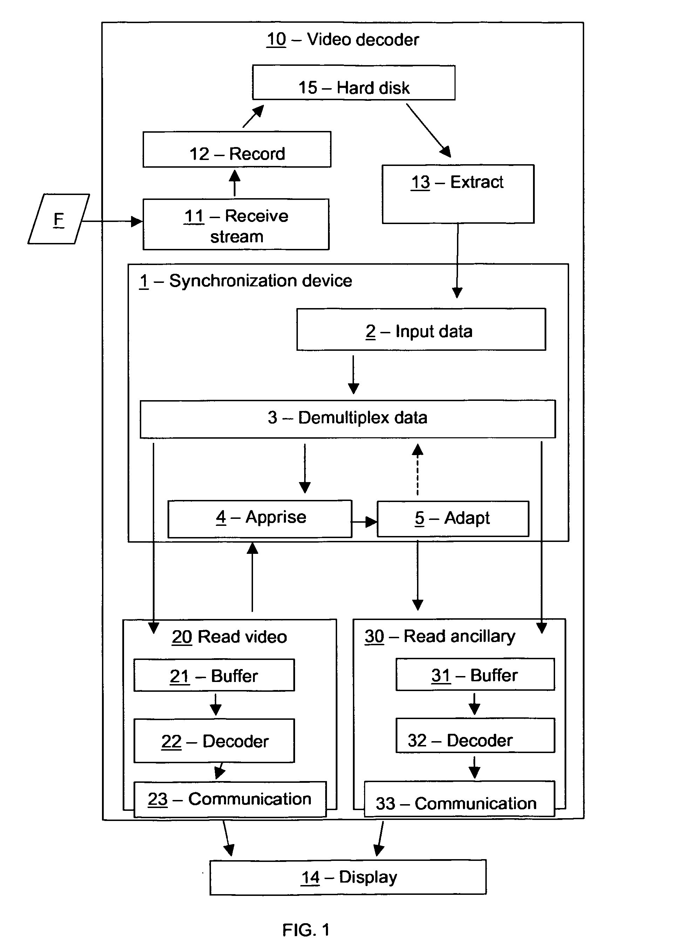

In Figure 1, the modules represented are functional units which may or may not correspond to physically distinguishable units. For example, these modules or some of them may be grouped together into a single component, or constitute functionalities of one and the same piece of software. *A contrario*, certain modules may possibly be composed of separate physical entities.

A video decoding system 10 (Figure 1), for example of the television type equipped with a PVR, is designed to receive audiovisual programs received in the form of streams F, and to transmit them directly to a television viewer or record them in a storage space 15 so as to render them accessible later, the two operations possibly being performed simultaneously. In Figure 1, only the functionalities connected with recording are represented.

The video decoding system 10 comprises, in addition to the storage space 15 consisting for example of a hard disk:

- a module 11 for receiving the audiovisual streams F;
- a module 12 for recording the data of these streams F on the hard disk 15;
- a module 13 for extracting the data recorded on the hard disk 15;
- a synchronization device 1, able to demultiplex the extracted data and to distribute them to appropriate decoders according to their types, and to monitor a synchronized communication of these various types of data to the television viewer;
- a video reading assembly 20, designed to decode the data of video type;
- an ancillary reading assembly 30, designed to decode the data of subtitles and teletext type;
- and a display module 14, intended to communicate the decoded data to the television viewer.

The video reading assembly 20 comprises a buffer 21 for accumulating the video data before decoding, an elementary video decoder 22, and a unit 23 for communicating the decoded data to the display module 14. In a similar fashion, the ancillary reading assembly 30 comprises a buffer 31 for accumulating the subtitles and teletext data before decoding, an elementary ancillary decoder 32, and a unit 33 for communicating the decoded data to the display module 14.

The synchronization device 1 for its part is furnished with a module 2 for inputting the data extracted from the hard disk 15 and a demultiplexer 3, designed to identify and disperse these data to the reading assemblies 20 and 30. It also comprises an apprising module 4, capable of obtaining information originating from the video reading assembly 20 as regards instants of display of the video data to the television viewer, and an adaptation module 5, designed to adjust instants of display of the subtitles data as a function of this information.

In the embodiment described, the adjustment is done by introducing delays of display as regards the already decoded subtitling data, by acting on the ancillary reading assembly 30 (solid line). In a variant embodiment, the adaptation module 5 is designed to act upstream of the decoding on the demultiplexer 3, by introducing delays of transmission of the subtitling data to the ancillary reading assembly 30 after demultiplexing (dashed line). Such an embodiment may for example be obtained by using an elementary buffer associated with the demultiplexer 3, upstream of the reading assembly 30.

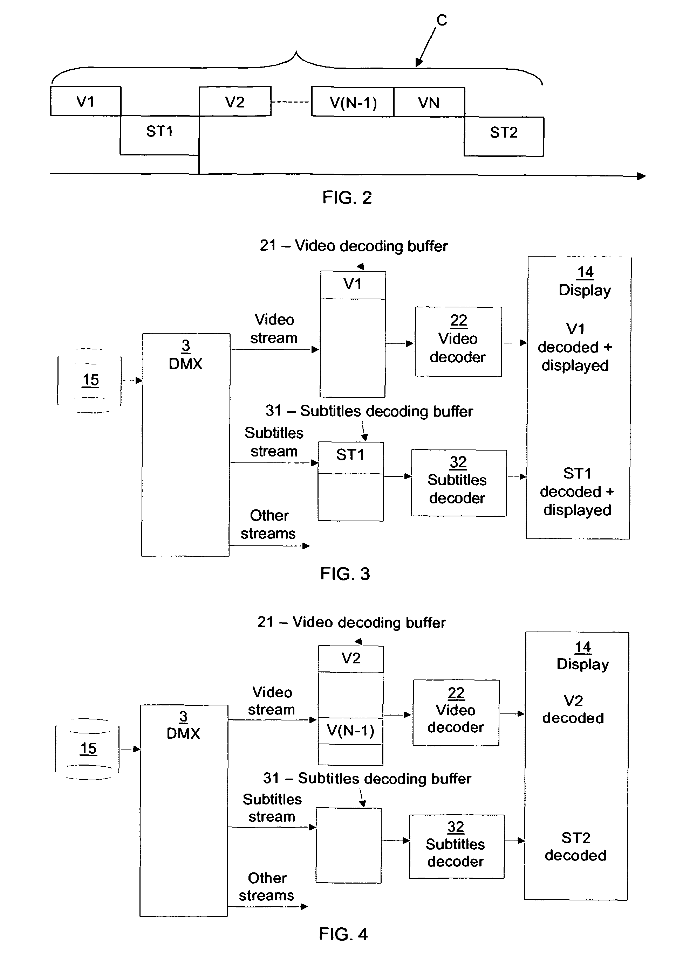

Several schemes of embodiment of the synchronization device 1 will now be set forth, with reference to Figures 2 to 6, through an example implementation.

In this example, a data string C recorded on the hard disk 15 (Figure 2) is composed of video data in the form of video images V1, V2...VN and of subtitling data in the form of subtitles ST1 and ST2, these video and subtitling data being multiplexed. More precisely, subtitle ST1, interposed between images V1 and V2, and subtitle ST2, disposed downstream of image VN, are designed to begin to be transmitted respectively with images V1 and VN. Thus, the N video images V1 to VN have to be displayed in succession between the dispatching of the two subtitles ST1 and ST2, thereby determining a duration of gap between their display.

For the sake of simplification in the presentation, it is assumed that the size of the set of video images V1 to VN corresponds to the capacity of the video decoding buffer 21, and that these images are intra-type MPEG images, sufficient in themselves for decoding. This purely illustrative example may readily lead to the understanding of more complex cases. Moreover, the explanations are centered hereinbelow on the synchronized displaying of the second subtitle ST2, but it may readily be verified that they are also applicable to the synchronized displaying of subtitle ST1, which is the first subtitle transmitted after a startup.

During reading from the hard disk 15 (Figure 3), image V1 is provided to the buffer 21 by the demultiplexer 3 and is decoded by the decoder 22. The corresponding subtitle ST1 is for its part provided to the buffer 31 and decoded by the subtitles decoder 32.

The procedure for decoding data originating from the hard disk 15 being such that the video decoding buffer 21 must be maximally filled, the data therefore continue to be extracted from the hard disk 15 so as to be transmitted to the demultiplexer 3 and to the two decoding buffers 21 and 31. The bit rate of transfer of the video data from the hard disk 15 to the decoding video buffer 21 is, in accordance with the customary situation, much greater than that of the video decoding. Typically, the transfer and video decoding bit rates are respectively of the order of 40 Mbits/s and 2 Mbits/s. It may therefore be considered that in most realistic cases one is in the situation where the buffer 21 is filled up to video image V (N-1), whereas the decoded image is only image V1 or V2.

When video VN then arrives in the video decoding buffer 21 (Figure 4), subtitle ST2 reaches the subtitles decoding buffer 31 and is immediately decoded. One is then in the case where subtitle ST2 is ready to be displayed considerably in advance, potentially of almost the entire content of the video decoding buffer 21 (to within the errors indicated above). Typically, this advance is of the order of 300 kbytes / [2 Mbits/s] (video quantity to be decoded over decoding speed), that is to say of more than one second. What is more, this lag decreases if the video bit rate increases, and increases if the video bit rate decreases.

With management of the PTSs for the subtitles, this offset would not be visible since the subtitles decoder 32 would decode subtitle ST2 and would wait for the presentation instant given by the corresponding time label to have arrived, in order to actually display it on the screen.

Subtitle ST2 would then be displayed with video VN, as intended.

The synchronization device 1 does without these PTSs, whether or not they are present in the data extracted from the hard disk 15. To do this it applies the algorithm described hereinafter. Let T1 be the time of arrival of subtitle ST2 in the decoding buffer 31, B the number of bytes present in the video decoding buffer 21 at this instant T1 and D the actual video bit rate, obtained by regularly sampling the level of the video buffer 21 and the number of data dispatched to this buffer 21. The instant of display T2 of subtitle ST2 is calculated by estimating the instant of video decoding corresponding to the consumption of the B bytes by the video decoder 22:

$$T2 = T1 + B/D$$

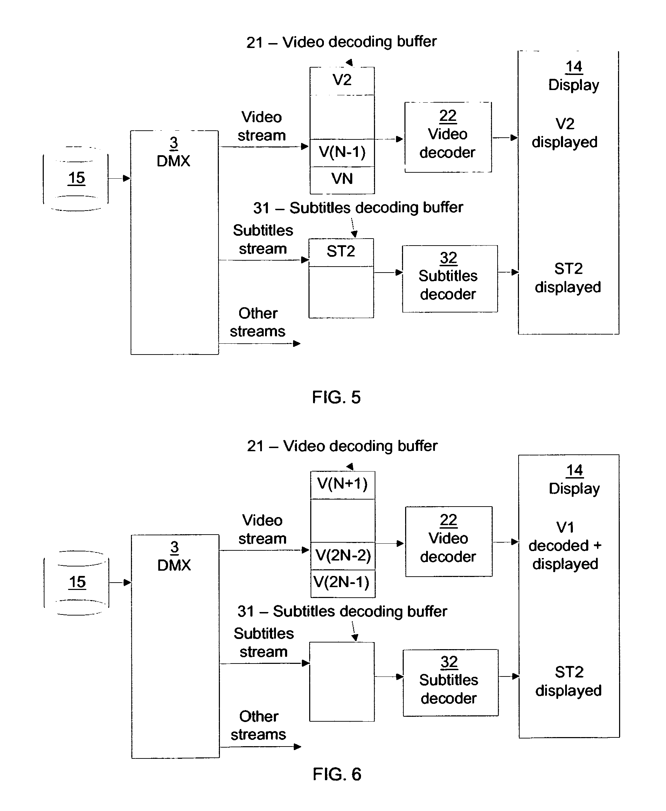

The instant T2 thus calculated gives the moment at which decoded subtitle ST2 is to be displayed. Thus, the already decoded subtitle ST2 is placed on standby while waiting for images V2 to VN to be decoded in turn (Figure 5), and is displayed at the appropriate moment T2, approximately at the same time as image VN (Figure 6). To do this, for example, the communication unit 33 keeps subtitle ST2 until a signal triggered by the adaptation module 5, which brings about transmission to the display module 14.

In an effective scheme of embodiment, the sampling of the level of the video buffer 21 is done every video frame, i.e. every 20 ms for a standardized European decoding system of PAL/SECAM type (50 Hz, standing for Phase Alternate Line/SEquentiel Couleur A Mémoire), and every 16.6 ms for the standardized systems of NTSC type (60 Hz, standing for National Television System Committee).

This method operates with good precision not only at constant speed, but also in the fast forward or slow motion modes, since the bit rate D adapts to the reading speed.

As indicated above, it is possible to verify that the synchronization of the first subtitle ST1 after startup with the video image V1 is also ensured by the method described. Specifically, the capacity B of the video buffer 21 upon the arrival of subtitle ST1 corresponds to image V1. Hence, the estimated lag in displaying subtitle ST1, given by the ratio B/D, corresponds approximately to the lag in displaying the image V1 from the receipt of subtitle ST1 in the ancillary decoding buffer 31.

In a first variant, one regularly samples the consumption of data in the video decoding buffer 21. In this way, the instant T2 is detected by comparing the number of bytes consumed in the video buffer 21 from the instant T1 with the number of bytes B present in this buffer 21 at this instant T1. In an advantageous embodiment, this sampling is done every video frame. The first variant makes it possible to ensure better precision in the fast forward or slow motion modes, since the value D of the bit rate is no longer to be considered.

In a second variant, a low-pass filter is applied to the estimated bit rate value.

In a third variant, the bit rate value is corrected by taking account of the decoding speed information. Hence, the actual bit rate is immediately modified as soon as the decoding speed changes, thereby avoiding the need to wait for this bit rate value to stabilize over time.

In a fourth variant, a fixed value of offset as regards the instant of display T2 is applied, in such a way as to incorporate an estimation of time errors not taken into account by the initial approximation as regards this instant T2.

According to other exemplary implementations, the lag in the processing of subtitle ST2 is introduced:

- after demultiplexing, before transmission to the subtitles buffer 31;
- after placement in buffer 31, before decoding by the decoder 32;
- or in the display module 14, before receipt of a display trigger signal originating from the adaptation module 5.

**Claims**

1.  Device for the read-synchronization (1) of video data (V1-VN) and of ancillary data (ST1, ST2) associated with said video data (V1-VN), with a view to synchronize the communication of said data, said video and ancillary data being recorded in a storage space (15) in multiplexed and chronological form, said synchronization device (1) comprising :

    - a module (2) for reading said data (V1-VN, ST1, ST2) recorded in the storage space (15), and
    - a module (3) for demultiplexing said read video data (V1-VN) and ancillary data (ST1, ST2), which is designed to transmit said video data to a video leading assembly (20) and said ancillary data to an ancillary reading assembly (30), said reading assemblies being intended to decode and to communicate said video data and said ancillary data respectively out of the video reading assembly, and out of the ancillary reading assembly,

    the video reading assembly (20) comprising

    - at least one buffer memory (21) for accumulating the video data (V1-VN) before decoding,
    - a video decoding unit (22) intended to successively decode said video data outputted from said buffer memory (21) and
    - a communication unit (23) intended to communicate said decoded video data out of the video reading assembly,

**characterized in that** said device (1) further comprises:

- a module (4) for calculating the instants T2 of communication of the ancillary data (ST1, ST2) out of the ancillary reading assembly (30) by adding to the instants T1 of communication of the ancillary data to the ancillary reading assembly the result of the division of the number of bytes (B) present in the buffer memory (21) at the instant T1 by the actual video bit rate (D),
- a module (5) for setting the instants of communication of the ancillary data (ST1, ST2), out of the ancillary reading assembly (30) to T2.

2. Synchronization device (1) according to Claim 1, **characterized in that** the module (4) for calculating is capable of obtaining dynamically the number of bytes present in the buffer memory (21), in such a way that the module (5) for setting the instants of communication is able to take account of the accelerations and decelerations of reading of the video data (V1-VN).

3. Synchronization device (1) according to one of Claims 1 or 2, **characterized in that** said modules (2-5) are designed so that said ancillary data comprise at least one subtitle (ST1, ST2).

4. Synchronization device (1) according to any one of the preceding claims, **characterized in that** said modules (2-5) are designed so that said ancillary data comprise data relating to at least one interactive program.

5. Synchronization device (1) according to any one of the preceding claims, **characterized in that** said modules (2-5) are designed so that said data are recorded in digital form, preferably according to the DVB standard.

6. Video decoding system (10) **characterized in that** it comprises a synchronization device (1) in accordance with any one of Claims 1 to 5.

7. Video decoding system (10) according to Claim 6, **characterized in that** it comprises a storage space (15), said storage space consisting preferably of a hard disk.

8. Process for the read-synchronization of video data (V1-VN) and of ancillary data (ST1, ST2) associated with said video data (V1-VN), with a view to a synchronize the communication of said data, said video and ancillary data being recorded in a storage space (15) in multiplexed and chronological form, in which said recorded video data (V1-VN) and ancillary data (ST1, ST2) are demultiplexed by transmitting said video data to a video reading assembly (20) and said ancillary data to an ancillary reading assembly (30), said reading assemblies being intended to decode and to communicate said video data and said ancillary data respectively out of the video reading assembly and out of the ancillary reading assembly, the video reading assembly (20) comprises at least one buffer memory (21) intended to provisionally accumulate the video data (V1-VN) before decoding, a video decoding unit (22) intended to successively decode said video data outputted from said buffer memory (21) and a communication unit (23) intended to communicate said decoded video data out of the video reading assembly,
**characterized in that** the instants T2 of communication of the ancillary data (ST1, ST2) out of the ancillary reading assembly (30) are calculated by adding to the instants T1 of communication of the ancillary data to the ancillary reading assembly the result of the division of the number of bytes (B) present in the buffer memory (21) at the instant T1 by the actual video bit rate (D), the said instants of communication of the ancillary data (ST1, ST2) out of the ancillary reading assembly being set to T2.

9. Computer program product comprising program code instructions for the execution of the steps of the process according to Claim 8, when said program is executed on a computer.


**Patentansprüche**

1. Vorrichtung zur Lesesynchronisierung (1) von Videodaten (V1-VN) und von den Videodaten (V1-VN) zugeordneten Hilfsdaten (ST1, ST2) hinsichtlich einer Synchronisierung der Übermittlung der Daten, wobei die Video- und Hilfsdaten in multiplexierter und chronologischer Form in einem Speicherraum (15) aufgezeichnet sind, wobei die Synchronisierungsvorrichtung (1) umfasst:

- ein Modul (2) zum Lesen der in dem Speicherraum (15) aufgezeichneten Daten (V1-VN, ST1, ST2), und
- ein Modul (3) zum Demultiplexen der gelesenen Videodaten (V1-VN) und Hilfsdaten (ST1, ST2), das so ausgelegt ist, dass es die Videodaten an eine Videolesebaueinheit (20) und die Hilfsdaten an eine Hilfslesebaueinheit (30) sendet, wobei die Lesebaueinheiten dafür bestimmt sind, die Videodaten bzw. die Hilfsdaten zu decodieren und aus der Videolesebaueinheit und aus der Hilfslesebaueinheit zu übermitteln,

wobei die Videolesebaueinheit (20) umfasst:

- mindestens einen Pufferspeicher (21) zum Ansammeln der Videodaten (V1-VN) vor der Decodierung,
- eine Videodecodierungseinheit (22), die dafür bestimmt ist, die von dem Pufferspeicher (21) ausgegebenen Videodaten aufeinanderfolgend zu decodieren, und
- eine Übermittlungseinheit (23), die dafür bestimmt ist, die decodierten Videodaten aus der Videolesebaueinheit zu übermitteln,

**dadurch gekennzeichnet, dass** die Vorrichtung (1) ferner umfasst:

- ein Modul (4) zum Berechnen der Zeitpunkte T2 der Übermittlung der Hilfsdaten (ST1, ST2) aus der Hilfslesebaueinheit (30) **dadurch**, dass zu den Zeitpunkten T1 der Übermittlung der Hilfsdaten an die Hilfslesebaueinheit das Ergebnis der Division der Anzahl der zum Zeitpunkt T1 in dem Pufferspeicher (21) vorhandenen Bytes (B) durch die tatsächliche Videobitrate (D) addiert wird,
- ein Modul (5) zum Einstellen der Zeitpunkte der Übermittlung der Hilfsdaten (ST1, ST2) aus der Hilfslesebaueinheit (30) auf T2.

2. Synchronisierungsvorrichtung (1) nach Anspruch 1, **dadurch gekennzeichnet, dass** das Modul (4) zum Berechnen die Anzahl der in dem Pufferspeicher (21) vorhandenen Bytes dynamisch in der Weise erhalten kann, dass das Modul (5) zum Einstellen der Zeitpunkte der Übermittlung die Beschleunigungen und Verzögerungen des Lesens der Videodaten (V1-VN) berücksichtigen kann.

3. Synchronisierungsvorrichtung (1) nach einem der Ansprüche 1 oder 2, **dadurch gekennzeichnet, dass** die Module (2-5) so ausgelegt sind, dass die Hilfsdaten mindestens einen Untertitel (ST1, ST2) umfassen.

4. Synchronisierungsvorrichtung (1) nach einem der vorhergehenden Ansprüche, **dadurch gekennzeichnet, dass** die Module (2-5) so ausgelegt sind, dass die Hilfsdaten Daten umfassen, die sich auf mindestens ein interaktives Programm beziehen.

5. Synchronisierungsvorrichtung (1) nach einem der vorhergehenden Ansprüche, **dadurch gekennzeichnet, dass** die Module (2-5) so ausgelegt sind, dass die Daten in digitaler Form, vorzugsweise gemäß der DVB-Norm, aufgezeichnet sind.

6. Videodecodierungssystem (10), **dadurch gekennzeichnet, dass** es eine Synchronisierungsvorrichtung (1) nach einem der Ansprüche 1 bis 5 umfasst.

7. Videodecodierungssystem (10) nach Anspruch 6, **dadurch gekennzeichnet, dass** es einen Speicherraum (15) umfasst, wobei der Speicherraum vorzugsweise aus einer Festplatte besteht.

8. Verfahren zur Lesesynchronisierung von Videodaten (V1-VN) und von den Videodaten (V1-VN) zugeordneten Hilfsdaten (ST1, ST2) hinsichtlich einer Synchronisierung der Übermittlung der Daten, wobei die Video- und Hilfsdaten in multiplexierter und chronologischer Form in einem Speicherraum (15) aufgezeichnet sind, in dem die aufgezeichneten Videodaten (V1-VN) und Hilfsdaten (ST1, ST2) durch Senden der Videodaten an eine Videolesebaueinheit (20) und der Hilfsdaten an eine Hilfslesebaueinheit (30) demultiplexiert werden, wobei die Lesebaueinheiten dafür bestimmt sind, die Videodaten bzw. die Hilfsdaten zu decodieren und aus der Videolesebaueinheit und aus der Hilfslesebaueinheit zu übermitteln, wobei die Videolesebaueinheit (20) mindestens einen Pufferspeicher (21) umfasst, der dafür bestimmt ist, die Videodaten (V1-VN) vor der Decodierung zeitweilig anzusammeln, wobei eine Videodecodierungseinheit (22) zum aufeinanderfolgenden Decodieren der von dem Pufferspeicher (21) ausgegebenen Videodaten bestimmt ist und eine Übermittlungseinheit (23) zum Übermitteln der decodierten Videodaten aus der Videolesebaueinheit bestimmt ist,

**dadurch gekennzeichnet, dass** die Zeitpunkte T2 der Übermittlung der Hilfsdaten (ST1, ST2) aus der Hilfslesebaueinheit (30) **dadurch** berechnet werden, dass zu den Zeitpunkten T1 der Übermittlung der Hilfsdaten an die Hilfslesebaueinheit das Ergebnis der Division der Anzahl der zu dem Zeitpunkt T1 in dem Pufferspeicher (21) vorhandenen Bytes (B) durch die tatsächliche Videobitrate (D) addiert wird, wobei die Zeitpunkte der Übermittlung der Hilfsdaten (ST1, ST2) aus der Hilfslesebaueinheit auf T2 eingestellt werden.

9. Computerprogrammprodukt, das Programmcodeanweisungen zur Ausführung der Schritte des Verfahrens nach Anspruch 8, wenn das Programm auf einem Computer ausgeführt wird, umfasst.

**Revendications**

1. Dispositif de synchronisation en lecture (1) de données vidéo (V1-VN) et de données annexes (ST1, ST2) associées aux dites données vidéo (V1-VN), en vue d'une communication synchronisée desdites données, lesdites données vidéo et annexes étant enregistrées dans un espace de stockage (15) sous forme multiplexée et chronologique, ledit dispositif de synchronisation (1) comprenant :

- un module de lecture (2) desdites données (V1-VN, ST1, ST2) enregistrées dans l'espace de stockage (15), et
- un module de démultiplexage (3) desdites données vidéo lues (V1-VN) et des données annexes (ST1, ST2), prévu pour transmettre lesdites données vidéo à un ensemble de lecture vidéo (20) et lesdites données annexes à un ensemble de lecture annexe (30), lesdits ensembles de lecture étant destinés à décoder et à communiquer lesdites données vidéos et lesdites données annexes respectivement à l'extérieur de l'ensemble de lecture vidéo et à l'extérieur de l'ensemble de lecture annexe,

l'ensemble de lecture vidéo (20) comprenant

- au moins une mémoire tampon (21) pour accumuler les données vidéo (V1-VN) avant leur décodage,
- une unité de décodage vidéo (22) destinée à décoder successivement lesdites données vidéo en sortie de ladite mémoire tampon (21) et
- une unité de communication (23) destinée à communiquer lesdites données vidéo décodées en sortie de l'ensemble de lecture vidéo,

**caractérisé en ce que** ledit dispositif (1) comprend en outre :

- un module (4) pour calculer les instants T2 de communication des données annexes (ST1, ST2) en sortie de l'ensemble de lecture annexe (30) en ajoutant aux instants T1 de communication des données annexes à l'ensemble de lecture annexe le résultat de la division du nombre d'octets (B) présents dans le buffer mémoire (21) à l'instant T1 par le débit vidéo courant (D),
- un module (5) pour ajuster les instants de communication des données annexes (ST1, ST2) en sortie de l'ensemble de lecture annexe (30) à T2.

2. Dispositif de synchronisation (1) selon la revendication 1, **caractérisé en ce que** le module de calcul (4) est capable d'obtenir dynamiquement le nombre d'octets présents dans la mémoire tampon (21), de telle sorte que le module d'ajustement (5) est apte à prendre en compte des accélérations et des ralentissements de lecture des données vidéo (V1-VN).

3. Dispositif de synchronisation (1) selon l'une des revendications 1 ou 2, **caractérisé en ce que** lesdits modules (2-5) sont prévus pour que lesdites données annexes comprennent au moins un sous-titre (ST1, ST2).

4. Dispositif de synchronisation (1) selon l'une quelconque des revendications précédentes, **caractérisé en ce que** lesdits modules (2-5) sont prévus pour que lesdites données annexes comprennent des données relatives à au moins un programme interactif.

5. Dispositif de synchronisation (1) selon l'une quelconque des revendications précédentes, **caractérisé en ce que** lesdits modules (2-5) sont prévus pour que lesdites données soient enregistrées sous forme numérique, préférentiellement selon la norme DVB.

6. Système de décodage vidéo (10) **caractérisé en ce qu'**il comprend un dispositif de synchronisation (1) conforme à l'une quelconque des revendications 1 à 5.

7. Système de décodage vidéo (10) selon la revendication 6, **caractérisé en ce qu'**il comprend un espace de stockage (15), ledit espace de stockage consistant de préférence en un disque dur.

8. Procédé de synchronisation en lecture de données vidéo (V1-VN) et de données annexes (ST1, ST2) associées aux dites données vidéo (V1-VN), en vue d'une communication synchronisée desdites données, lesdites données vidéo et annexes étant enregistrées dans un espace de stockage (15) sous forme multiplexée et chronologique, dans lequel on démultiplexe lesdites données vidéo (V1-VN) et annexes (ST1, ST2) enregistrées, en transmettant lesdites données vidéo à un ensemble de lecture vidéo (20) et lesdites données annexes à un ensemble de lecture annexe (30), lesdits ensembles de lecture étant destinés à décoder et à communiquer lesdites données vidéos et lesdites données annexes respectivement à l'extérieur de l'ensemble de lecture vidéo et à l'extérieur de l'ensemble de lecture annexe, l'ensemble de lecture vidéo (20) comprenant

- au moins une mémoire tampon (21) pour accumuler les données vidéo (V1-VN) avant leur décodage,
- une unité de décodage vidéo (22) destinée à décoder successivement lesdites données vidéo en sortie de ladite mémoire tampon (21) et
- une unité de communication (23) destinée à communiquer lesdites données vidéo décodées en sortie de l'ensemble de lecture vidéo,
- **caractérisé en ce que** les instants T2 de communication des données annexes (ST1, ST2) en sortie de l'ensemble de lecture annexe (30) sont calculés en ajoutant aux instants T1 de communication des données annexes à l'ensemble de lecture annexe le résultat de la division du nombre d'octets (B) présents dans le buffer mémoire (21) à l'instant T1 par le débit vidéo courant (D), lesdits instants de communication des données annexes (ST1,ST2) en sortie de l'ensemble de lecture annexe (30) étant ajustés à T2.

9. Produit programme d'ordinateur comprenant des instructions de code de programme pour l'exécution des étapes du procédé selon la revendication 8, lorsque ledit programme est exécuté sur un ordinateur.

# 10 – Video decoder

| 15 – Hard disk |
| --- |

| 12 – Record |
| --- |

| 11 – Receive stream |
| --- |

| 13 – Extract |
| --- |

F

## 1 – Synchronization device

| 2 – Input data |
| --- |

| 3 – Demultiplex data |
| --- |

| 4 – Apprise | 5 – Adapt |
| --- | --- |

### 20 Read video

| 21 – Buffer |
| --- |

| 22 – Decoder |
| --- |

| 23 – Communication |
| --- |

### 30 – Read ancillary

| 31 – Buffer |
| --- |

| 32 – Decoder |
| --- |

| 33 – Communication |
| --- |

| 14 – Display |
| --- |

FIG. 1

FIG. 2

21 – Video decoding buffer

FIG. 3

21 – Video decoding buffer

FIG. 4

21 – Video decoding buffer

FIG. 5

21 – Video decoding buffer

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20010005447 A

- US 6122434 A